# EUROPEAN PATENT APPLICATION

(11) **EP 0 987 537 A2**
(43) Date of publication of application: **22.03.2000**
(21) Application number: 99116996.2
(22) Date of filing: 28.08.1999
(51) Int. Cl.: G01N 21/21

(54) **Micropolarimeter and ellipsometer**

(30) Priority: 16.09.1998 DE 19842364
(71) Applicant: NanoPhotonics AG, 55129 Mainz (DE)
(72) Inventor: Abraham, Michael, Dr., 55129 Mainz (DE); Eberhardt, Matthias, Dr., 55296 Lörzweiler (DE)
(74) Representative: Fuchs Mehler Weiss & Fritzsche

(57) **Zusammenfassung**

Bei den bekannten Polarimetern und Ellipsometern ist es bisher nicht möglich, vollständige optische Informationen flächig ausgeleuchteter Proben zu erhalten. Dies soll bei Polarimeter und Ellipsometer erreicht werden, wobei eine kompakte Bauweise die Benutzung erleichtern soll.

Um die simultane flächenmäßige Erfassung aller optischen Informationen einer Probe zu erhalten, besteht der Retarder des Mikropolarimeters aus einem einstückigen Retarderarray (21) mit mindestens einer Pixelgruppe (25), bei dem die Hauptachsenausrichtungen (24) der einzelnen Pixel (23) über einen Winkelbereich von 360° verteilt sind. Dieses Mikropolarimeter kann in das Auflichtmikroskop eines Ellipsometers integriert werden. Dadurch wird ein kompaktes Meßgerät geschaffen.

Ellipsometrische Messungen.

## Description

Die Erfindung betrifft ein Mikropolarimeter mit einem Retarder, einer dahinter angeordneten Analysatorscheibe und einer Photo-Detektor-Matrix sowie ein Ellipsometer mit Lichtquelle, Polarisator und Polarimeter und ein Ellipsometer mit Lichtquelle, Polarisator, Polarimeter und Auflichtmikroskop mit Objektiv und Okular, wobei Polarisator und Polarimeter im Auflichtmikroskop integriert sind.

Licht wird in der Technik häufig als berührungslose Sonde zur Messung von Probeneigenschaften benutzt. Dabei wird die Änderung von Eigenschaften der Strahlung nach der Wechselwirkung mit der Probe ausgenutzt. In der Polarimetrie und Ellipsometrie macht man sich die in den Polarisationseigenschaften enthaltenen Informationen bzw. deren Änderungen infolge der Probenwechselwirkung zunutze. Bei vollständig polarisiertem Licht sind dies die Elliptizität, die Lage der Hauptachse im Raum (Azimuth) und der Drehsinn des Feldstärkevektors. Für partiell polarisiertes Licht kommt noch der Polarisationsgrad hinzu. Diese Größen werden durch die vier Elemente des Stokesvektors, die sogenannten Stokesparameter beschrieben (s. R.M. Azzam, Bashara, Ellipsometry and Polarized Light, North Holland, Amsterdam, 1988).

Geräte zur Messung der Parameter von polarisiertem Licht nennt man Polarimeter. Die Kombination einer polarisierten Lichtquelle mit einem Polarimeter zur Messung der Eigenschaften dünner Schichten und Oberflächen nennt man Ellipsometer. Aus den ellipsometrischen Grundgrößen werden mit Hilfe geeigneter mathematischer Algorithmen Probeneigenschaften, wie die Dicke und die Brechzahl von Schichten errechnet. Wünscht man Informationen über Probeneigenschaften an verschiedenen Orten der Probe, so wird gewöhnlich die Probe durch eine Verschiebeeinrichtung bewegt.

Informationen dieser Art sind für die Qualitätskontrolle in der Dünnschichtindustrie und der Mikroelektronik von großer Bedeutung. In der Glasindustrie kann mit einem Polarimeter der Spannungszustand des Glases untersucht werden. Mit steigendem Durchmesser der Proben wird jedoch das Abrastern der Oberfläche mit einem punktweise messenden Ellipsometer oder Polarimeter zeitlich sehr aufwendig. Die präzise Bewegung sehr großer Proben ist darüber hinaus mit einem erheblichen Aufwand verbunden.

In der Ellipsometrie und Polarimetrie werden häufig Anordnungen mit mechanisch bewegten Polarisatoren bzw. Retardern (z.B. λ/4-Plättchen) benutzt (s. R.M. Azzam, Bashara, "Ellipsometry and Polarized Light", North Holland, Amsterdam, 1988).

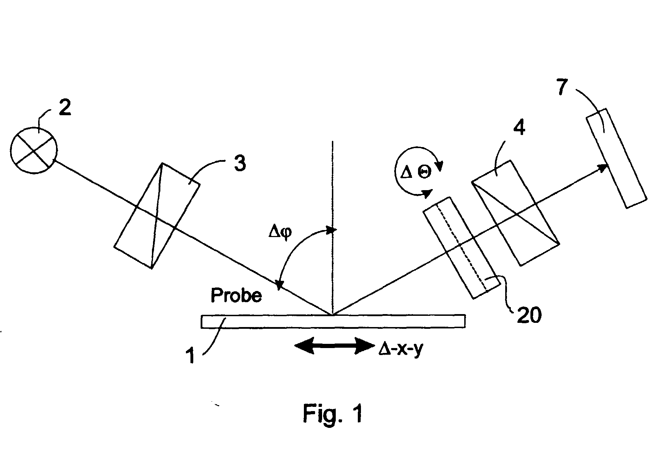

Eine Lichtquelle liefert ein kollimiertes Bündel, welches mit Hilfe eines Polarisators linear vorpolarisiert wird. Nach der Wechselwirkung mit der Probe hat sich der Polarisationszustand der Strahlung geändert. Dies kann mit Hilfe eines Retarders und eines nachgeschalteten Analysators über einen Detektor photometrisch nachgewiesen werden. Dazu wird entweder der Retarder oder der Analysator gedreht und das am Detektor entstehende zeitlich periodische Signal ausgewertet (siehe Fig. 1). Eine solche ellipsometrische Anordnung liefert die Informationen nur für den Bereich der Probe, der im Nachweiskanal erfaßt wird. Dieses Verfahren ist sehr langsam und erfordert die Verwendung sehr präziser und teurer mechanischer Verschiebetische.

In der DE 197 08 036 wird ein ellipsometrisches Mikroskop beschrieben, das den Aufbau eines Auflicht- oder auch Durchlichtmikroskops mit dem Aufbau eines Ellipsometers kombiniert und dadurch erlaubt, ein direktes Bild einer Oberfläche zu bekommen und gleichzeitig das von der Probe reflektierte Licht bezüglich der Polarisation und der Intensität auszuwerten. Dazu werden bewegliche Ellipsometerkomponenten verwendet. Insbesondere wird versucht, eine möglichst hohe laterale Auflösung bei einem beliebigen Einfallswinkel zwischen 0° und annähernd 90° zu erreichen.

In der WO 86/07631 wird ein Photopolarimeter für die gleichzeitige Messung sämtlicher vier Stokesparameter beschrieben, bei dem drei Detektoren für den Nachweis eingesetzt werden. Bei dieser Anordnung sind zwar keine bewegten Teile vorhanden, es wird aber nur ein Punkt der Probe abgebildet.

Eine ähnliche Vorrichtung ohne bewegte Teile wird in der US 5,335,066 beschrieben.

In der EP 0 632 256 A1 wurde ein Array-Polarimeter vorgeschlagen. Jedoch werden auch hier die Elemente des Arrays für die Ermittlung der Polarisationseigenschaften eines Meßstrahls benutzt, welcher nur einen Punkt der Probe abbildet.

In der US 5,166,752 wird ein CCD-Array in einer ellipsometrischen Anordnung verwendet. Sie dient dazu, mit Hilfe einer Vorschaltoptik einen Fächer verschiedener Einfallswinkel simultan zu erfassen und damit die Anzahl der unabhängigen Messungen für einen Probenpunkt zu erhöhen.

Eine simultane flächenmäßige Erfassung der Polarisationseigenschaften ist nicht vorgesehen.

Aus der DE 195 47 553 C1 ist eine Vorrichtung ohne bewegliche Komponenten bekannt, die zur Simultanbestimmung des Polarisationszustandes der elektromagnetischen Strahlung einen Detektor aufweist, der matrixartig angeordnete Felder besitzt. Auf die Matrixfelder der CCD-Matrix des Detektors sind Polarisationsfolien aufgebracht, die unterschiedliche Azimuthe aufweisen. Beispielsweise drei Polarisatoren mit unterschiedlichem Azimuth werden zu einem Bildelement zusammengefaßt, was drei Winkelstellungen eines rotierenden Analysators entspricht.

Eine ähnliche Anordnung mit Polarisationspixeln wird in der US 4,286,843 beschrieben. Obwohl eine simultane flächenmäßige Erfassung der Probe möglich ist, besteht der Nachteil dieser Anordnungen darin, daß die praktische Umsetzung dieser Anordnungen sehr schwierig ist. Grund dafür sind die Mikrometerabmessungen der Pixel der zugeordneten Photodetektorarrays. Sie liegen typischerweise im Bereich von 20 x 20 µm². Die Herstellung derart kleiner Stücke aus einer Polarisatorfolie von typischerweise 300 µm Dicke und ihre Assemblierung auf dem Detektorarray stellt eine technisch und wirtschaftlich sehr hohe Barriere dar. Tatsächlich ist keine bekannte technische Realisierung der in der US 4,286,843 vorgeschlagenen Anordnung bekannt. Ein weiterer Nachteil ist die Anordnung als Polarisatorarray. Damit lassen sich nicht alle Stokesparameter bestimmen. Insbesondere bleibt der Drehsinn der Polarisation unbekannt.

Die Aufgabe der Erfindung besteht darin, daß ein kompaktes, parallel arbeitendes bildgebendes Mikropolarimeter für die simultane flächenmäßige Erfassung von Schicht- und Geometrieeigenschaften einer Probe geschaffen werden soll, wobei die kompakte Bauform eine einfache Implementierung des Gerätes in Prozeßanlagen und Ellipsometer erleichtern soll. Die Aufgabe bezieht sich auch auf ein kompaktes Ellipsometer, mit dem auf einfache Weise die Probeneigenschaften gemessen werden können.

Diese Aufgabe wird mit einem Mikropolarimeter gelöst, bei dem der Retarder ein einstückiges Retarderarray mit mindestens einer Pixelgruppe ist, die mindestens drei Pixel aufweist, deren Hauptachsenausrichtungen über einen Winkelbereich von 360° verteilt sind. Es ist hierbei sinnvoll, die Hauptachsenausrichtungen gleichmäßig über den gesamten Winkelbereich zu verteilen.

Die Erfindung geht von der Überlegung aus, daß der Ersatz der Rotation des Retarders durch ein Array von Retarderpixeln ersetzt werden kann, die über eine Photo-Detektor-Matrix, insbesondere über eine CCD-Kamera ausgelesen werden können. Jedes Pixel entspricht dabei einer Winkelstellung des Retarders. Die Polarisationseigenschaften der Pixel in der Gruppe variieren von Pixel zu Pixel derart, daß aus der Gesamtheit der photometrischen Information die Polarisation eines diese Pixelgruppe treffenden Lichtteilbündels ermittelt werden kann. Die zur Polarisationsanalyse erforderliche Anzahl von Pixeln wird jeweils zu einer Pixelgruppe zusammengefaßt, die damit ein Mikropolarimeter bildet.

Der Vorteil der erfindungsgemäßen Anordnung der Retarderpixel gegenüber den bekannten Anordnungen von Polarisationspixeln besteht darin, daß die Retardertechnik den kompletten Stokesvektor liefert und nicht nur 3 der 4 Stokesparameter.

Das Retarderarray ist erfindungsgemäß ein einstückiges Bauteil, so daß die Montage einzelner Pixel entfällt. Das Mikropolarimeter ist dadurch kostengünstig herstellbar.

Um ein einstückiges Retarderarray herzustellen, werden vorzugsweise lithographische, präge- oder spritzgußtechnische Verfahren eingesetzt. Unter lithographischen Verfahren wird eine Kombination hochauflösender Lithographieverfahren mit Beschichtungs- und Ätztechniken verstanden. Die entsprechende Technologie ist aus der Mikrotechnik bekannt. Damit wird ein solches Retarderarray erstmalig auch technisch umsetzbar. Man erhält ein Bauelement, welches eine extrem hohe Informationsdichte liefert, die mit dem Stand der Technik weder unter technischen noch unter wirtschaftlichen Gesichtspunkten erreichbar ist.

Retarder haben im technologisch immer wichtigeren UV-Spektralbereich deutliche Vorteile gegenüber Folienpolarisatoren, deren Effizienz hier nachläßt. Der Grund dafür ist, daß man Retarder, wie erfindungsgemäß vorgeschlagen, aus Materialien machen kann, die im UV-Bereich noch eine sehr gute Transparenz zeigen, z.B. Kalziumfluorid. Dagegen bestehen Folienpolarisatoren aus organischen Stoffen, deren Dichroismus, der zur Polarisation führt, im UV-Bereich nachläßt.

Vorzugsweise sind die Pixel einer Pixelgruppe in mindestens einer Pixelzeile angeordnet. Ein solches lineares Retarderarray entspricht der vollständigen Rotation eines herkömmlichen Retarders. Wird ein Punkt der Probe auf einem solchen Array abgebildet, so können damit die Probeneigenschaften an diesem Punkt ohne Rotation eines Retarders ermittelt werden.

Vorteilhafterweise ist der Retarderarray eine Pixelmatrix mit identischen Pixelzeilen. Faßt man identische Pixelgruppen in dieser Weise zu einer Matrix zusammen, so können weitere Informationen gewonnen werden. Während die X-Richtung (Richtung der Pixel-Zeile) zur Polarisationsanalyse benutzt werden kann, steht die Y-Richtung für eine spektrale oder Winkeldispersion zur Verfügung. Damit kann man die Vielzahl der pro Probenpunkte ermittelbaren physikalischen Informationen erweitern. Es lassen sich daher beispielsweise auch Mehrschichtsysteme mit mehreren Unbekannten charakterisieren.

Vorteilhafterweise ist für eine Wellenlängenselektion zwischen der Probe und dem Retarderarray ein Prisma oder ein Gitter angeordnet.

Die Pixel einer Pixelgrupe sind gemäß einer weiteren Ausführungsform vorzugsweise zweidimensional angeordnet. Jede Pixelgruppe bildet ein Mikropolarimeter, wobei die Pixelgruppen zu einer Matrix zusammengefaßt werden können, die ein Bild der optischen Eigenschaften der Probe liefen.

Vorzugsweise bestehen die Pixel aus dielektrischen Gitterstrukturen mit Gitterabständen kleiner der Lichtwellenlänge.

Vorzugsweise werden sogenannte Subwavelength-Structures eingesetzt, bei denen es sich um dielektrische Gitterstrukturen handelt, deren Abmessungen deutlich unterhalb der Wellenlänge des benutzten Lichtes liegen.

Vorzugsweise entspricht die Größe der Detektorpixel der Größe der Retarderpixel.

Die Pixel des Retarderarrays sind vorzugsweise auf einem gemeinsamen Substrat angeordnet.

Vorteilhafterweise ist das einstückige Retarderarray auf einem Analysatorplättchen aufgeklebt.

Das Analysatorplättchen kann wiederum beispielsweise auf der Photo-Detektor-Matrix aufgeklebt sein.

Das Ellipsometer weist ein Auflichtmikroskop und ein Mikropolarimeter auf, wobei der Polarisator und das Mikropolarimeter in das Auflichtmikroskop integriert sind. Das Mikropolarimeter ist in der Brennebene des Okulars angeordnet und weist einen Retarder, eine dahinter angeordnete Analysatorscheibe und eine Photo-Detektor-Matrix auf, wobei der Retarder ein einstückiges Retarderarray mit mindestens einer Pixelgruppe ist, die mindestens drei Pixel aufweist, deren Hauptachsenausrichtungen über einen Winkelbereich von 360° verteilt sind. Es wird dadurch ein insgesamt kompaktes Meßgerät geschaffen.

Im Strahlengang des Mikroskops sind vorzugsweise Mittel zur Einstellung des Einfallswinkels auf der Probenoberfläche angeordnet. Es hat sich herausgestellt, daß die Einfallswinkel für die Messung der Parameter von polarisiertem Licht vorzugsweise im Bereich von 60° - 80° liegen sollten, wobei Winkel von 70° am besten geeignet sind. Um dies zu erreichen, ist vor dem Objektiv eine Ringblende angeordnet.

Die Integration eines Mikropolarimeters in ein Mikroskop ist dadurch möglich geworden, daß es geringe Abmessungen und keine rotierenden Bauteile aufweist.

Bevorzugte Anwendungsgebiete sind die Polarisationsmikroskopie sowie die Schichtdickenmessung.

Vorzugsweise ist der Polarisator zwischen dem Kollimator und dem Strahlteiler angeordnet, damit die Lichtstrahlen weitgehend senkrecht auf dem Polarisator auftreffen.

Gemäß einer weiteren Ellipsometer-Alternative ist die Lichtquelle ein Laserdiodenarray mit Kollimationslinsen, wobei diese Beleuchtungsanordnung mit dem erfindungsgemäßen Mikropolarimeter in einem Gerät kombiniert ist.

Beispielhafte Ausführungsformen der Erfindung werden nachfolgend anhand der Zeichnungen näher erläutert.

Es zeigen:
- Figur 1: den schematischen Aufbau einer herkömmlichen ellipsometrischen Anordnung,
- Figur 2: ein Ellipsometer mit Auflicht-Mikroskop mit integriertem Mikropolarimeter,
- Figuren 3a, 3b: eine weitere Ausführungsform eines Ellipsometers,
- Figuren 4a, 4b: eine Ausführungsform einer Anordnung von Retarderpixeln,
- Figuren 5a, 5b: eine weitere Ausführungsform einer Anordnung von Retarderpixeln,
- Figur 6: eine perspektivische Darstellung eines Ausschnittes aus einer Pixelgruppe,
- Figur 7: einen Vertikalschnitt durch einen Detektor.

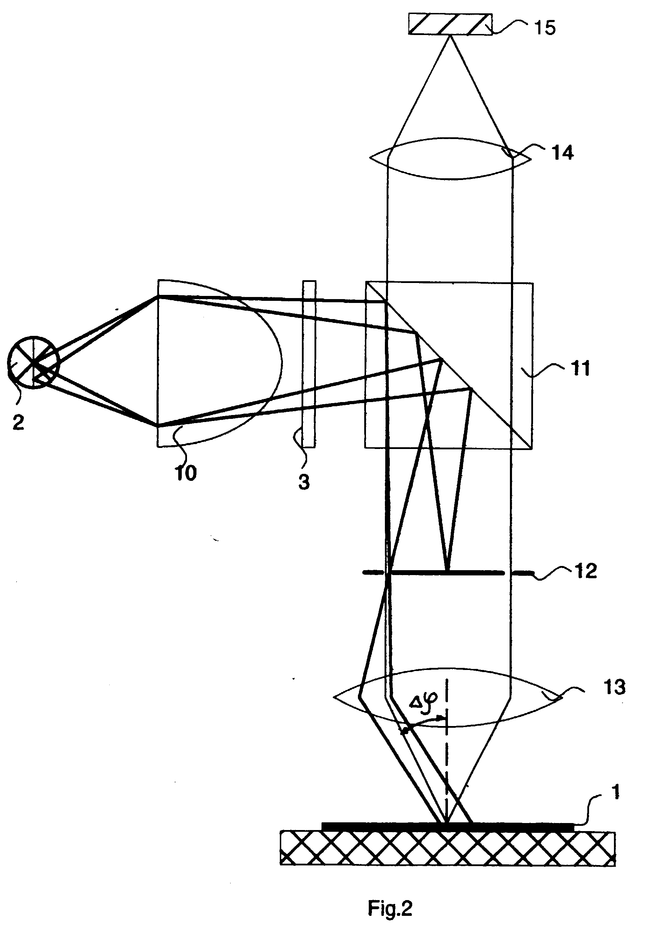

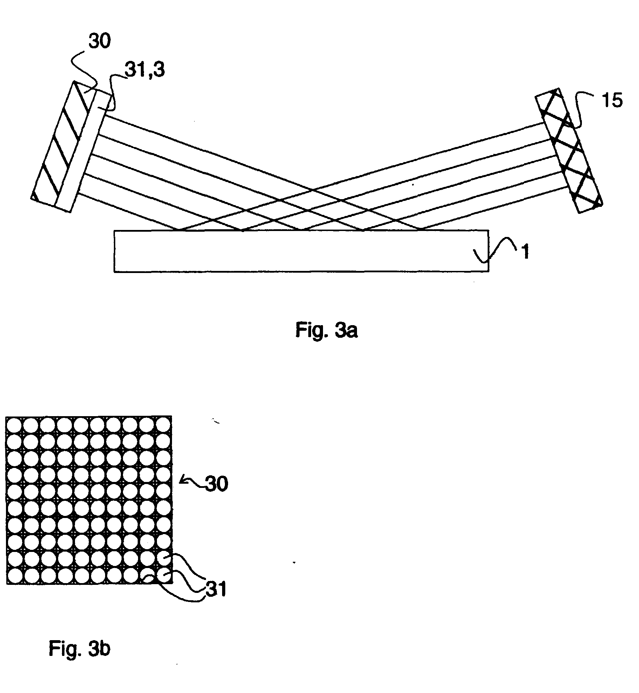

In der Figur 1 ist ein Ellipsometer nach dem Stand der Technik schematisch dargestellt. Das von einer Lichtquelle 2 ausgesandte Licht passiert einen Polarisator 3 und trifft auf die Probe 1 auf, wo das Licht unter dem Winkel Δϕ reflektiert wird. Nach Durchlaufen eines Retarders 20 und eines Analysators 4 trifft das reflektierte Licht auf einem Detektor 7 auf. Der Analysator 4 besteht aus einem ortsfesten Analysatorplättchen, wobei der Retarder in den Vorrichtungen nach dem Stand der Technik um den Winkel Δθ gedreht werden kann. Diese Drehung des Retarders 20 entfällt durch die erfindungsgemäße Anordnung der Retarderpixel in einem Retarderarray, der im Zusammenhang mit den Figuren 2 und 3 beschrieben wird.

Bezüglich der Strahlführung zur Abbildung der gesamten Oberfläche der Probe 1 sind die in der Figur 2 und 3a gezeigten Ellipsometer-Anordnungen geeignet. In der Figur 2 ist ein Auflicht-Mikroskop mit integriertem Mikropolarimeter 15 dargestellt, das eine Lichtquelle 2, einen Polarisator 3, einen Kollimator 10, einen Strahlteiler 11, eine Aperturblende 12, die als Ringblende ausgebildet ist, sowie ein Objektiv 13 und ein Okular 14 aufweist. Die Ringblende ist derart ausgebildet, daß der Einfallswinkel Δ ϕ im Bereich von 60° bis 80° liegt. Lichtstrahlen mit davon abweichenden Einfallswinkeln werden ausgeblendet. Mittels des Objektives 13 und des Okulars 14 erfolgt die Abbildung der Probenoberfläche auf dem Mikropolarimeter 15 mit Retarderarray 21, Analysator 4 und Detektor 7.

In der Figur 3a ist eine weitere Alternative eines Ellipsometers dargestellt, das als Lichtquelle ein Laserdiodenarray 30 mit Kollimationslinsen 31 und Polarisator 3 aufweist. Mit dieser Vorrichtung ist ebenfalls eine flächige Beleuchtung der Probe 1 möglich. In der Figur 3b ist die Draufsicht auf ein solches Laserdiodenarray 30 mit Kollimationslinsen 31 dargestellt.

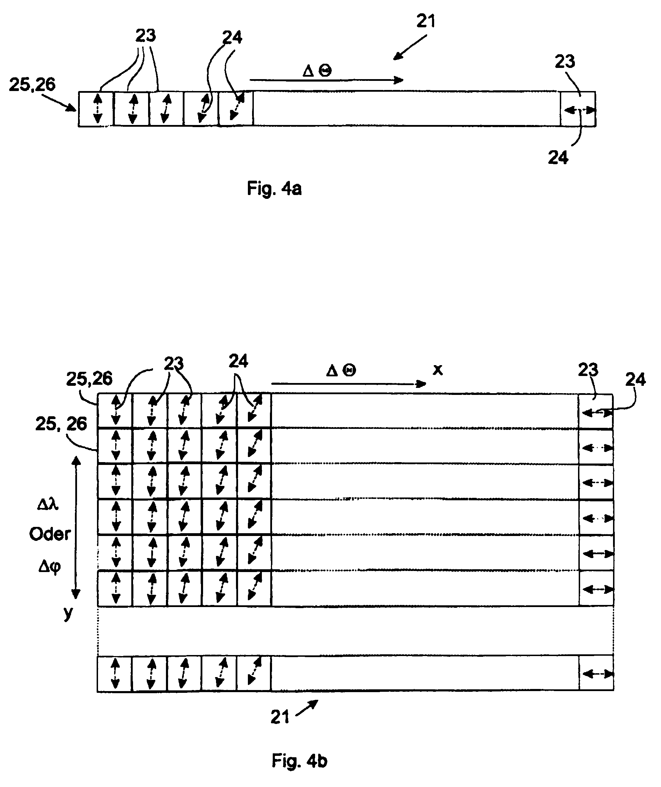

In der Figur 4a ist ein Retarderarray 21 dargestellt, bei dem die Pixel 23 als Pixelgruppe 25 in einer Pixelzeile 26 zusammengefaßt sind. Die Ausrichtungen der Hauptachsen 24 der Pixel 23 gehen sukzessive von einer vertikalen in eine horizontale Richtung über. Diese Situation entspricht der vollständigen Rotation eines herkömmlichen Retarders um den Winkel Δ θ. Bildet man einen Punkt der Probe auf einem solchen Retarderarray ab, so können damit die Probeneigenschaften an diesem Punkt ohne Rotation des Retarders ermittelt werden.

In der Figur 4b sind mehrere solcher Pixelgruppen 25 bzw. Pixelzeilen 26 in Form einer Matrix zusammengefaßt. Die Hauptachsenausrichtung 24 der Retarderpixel 23 in einer Spalte sind identisch. Während die X-Richtung zur Polarisationsanalyse benutzt werden kann, steht die Y-Richtung für eine spektrale oder Winkeldispersion zur Verfügung. Damit kann man die Vielzahl der pro Probenpunkt ermittelbaren physikalischen Informationen erweitern.

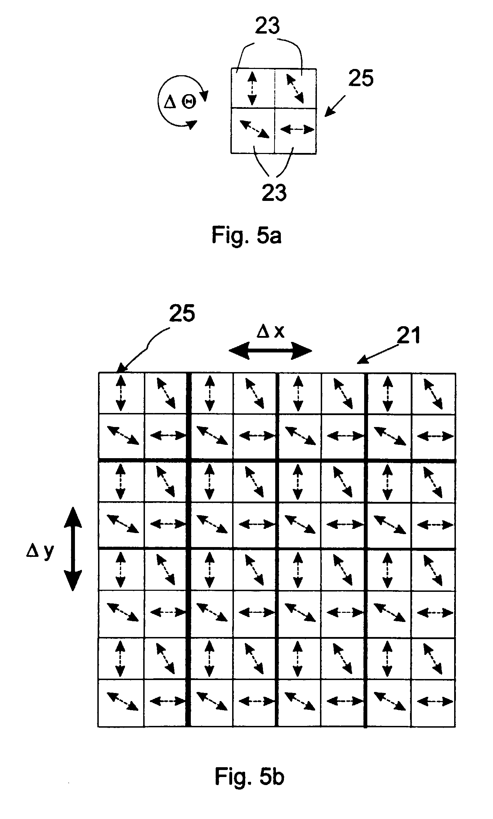

In der Figur 5a ist eine Pixelgruppe 25, bestehend aus vier Pixeln 23 zu einem kompakten Mikropolarimeter zusammengefaßt. Eine Zusammenfassung solcher Pixelgruppen 25 zu einer Matrix, wie dies in der Figur 5b dargestellt ist, liefert ein Bild der optischen Eigenschaften der Probe.

Die Ortsauflösung des bildgebenden Polarimeters wird durch die Abmessungen einer Pixelgruppe 25 bestimmt. Die Abmessungen der Pixel 23 sollten so gewählt werden, daß sie die Fläche eines Pixels einer CCD-Matrix von ca. 10 x 10 µm² abdecken. Eine Gruppe von beispielsweise vier Pixel 23, deren Hauptachsen 24 unterschiedlich orientiert sind, genügen zur Messung der Polarisation auf einem Flächenelement von 20 x 20 µm². Eine CCD-Matrix enthält bis zu 4000 x 4000 Pixel. Das bedeutet, daß es in der Verbindung mit einem vorgeschalteten Polarisator mit dieser Vorrichtung möglich ist, eine abbildende Polarisationsanalyse mit 200 x 200 Bildpunkten gleichzeitig durchzuführen. Man erhält mit der Geschwindigkeit und Auflösung einer CCD-Kamera die Schichtdickenverteilung der Strukturen, z.B. eines Schaltkreises auf einem Wafer oder die Verteilung von Spannungszuständen in einer Glasplatte, in einer transparenten Folie oder einer Faser. Die Rastermaße des Retarderarrays 21 und des Detektorarrays sind identisch. Die Komponenten sind derart miteinander verbunden, daß eine eindeutige Zuordnung beider Arrays gesichert ist.

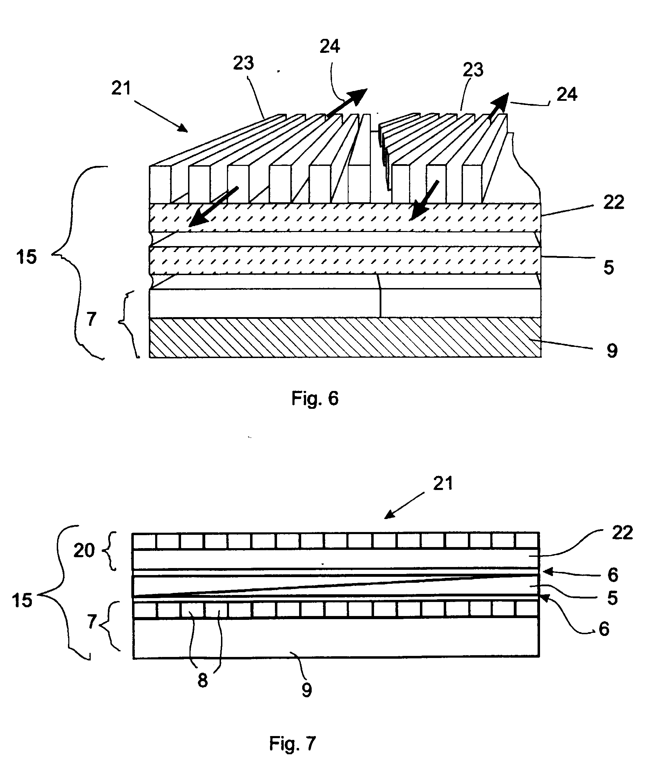

Figur 6 zeigt einen Ausschnitt aus einer Pixelgruppe 25, wobei zwei Pixel 23 dargestellt sind. Die Pixel 23 werden durch zwei Gitter 27 gebildet, deren Hauptachsenausrichtungen 24 unterschiedliche Winkel aufweisen. Die Gitterstrukturen 27 bestehen aus einem transparenten Material und bilden mit dem transparenten Retardersubstrat 22 eine Einheit. Typische Abmessungen solcher Gitterstrukturen sind Breite 200 nm, Grabenbreite 200 nm, Tiefe 400 nm. Fällt Licht auf diese Strukturen, so verhält sich die Oberfläche wie ein künstlich erzeugtes anisotropes Material, ähnlich den in der klassischen Optik zur Herstellung von Retardern eingesetzten anisotropen Kristallen.

Diese Gitter der Pixel 23 können mit Hilfe der Elektronenstrahllithographie in Kombination mit Ionenstrahlätzverfahren hergestellt werden. Nach der Herstellung der Gitter 27 wird die Gitter-Substrateinheit mittels eines Klebers mit dem Analysator 5 und dieser wiederum mit dem CCD-Detektor 7 verbunden, der ein Substrat 9 aufweist, auf dem sich die CCD-Pixel befinden. Die Stellung der Achse des Analysators 5 ist so gewählt, daß sie nicht mit einer der Hauptachsen 24 der Retarderpixel 23 zusammenfällt. Dies kann dadurch gelöst werden, daß die Winkel der Hauptachsen 24 innerhalb einer Pixelgruppe um 30° variieren, während die Achse des Analysators 5 auf 45° steht.

In der Figur 7 ist ein Vertikalschnitt durch ein Mikropolarimeter 15 mit Analysatorplättchen 5, Retarderarray 21 und Detektor 7 dargestellt.

### Bezugszeichen

- 1: Probe
- 2: Lichtquelle
- 3: Polarisator
- 4: Analysatorscheibe
- 5: Analysatorplättchen
- 6: Kleber
- 7: Detektor
- 8: Detektorpixel
- 9: Substrat
- 10: Kollimator
- 11: Strahlteiler
- 12: Aperturblende
- 13: Objektiv
- 14: Okular
- 15: Mikropolarimeter
- 20: Retarder
- 21: Retarderarray
- 22: Retardersubstrat
- 23: Pixel
- 24: Hauptachse
- 25: Pixelgruppe
- 26: Pixelzeile
- 27: Gitter
- 30: Laserdiodenarray
- 31: Kollimationslinsen

## Patentansprüche

1. Mikropolarimerer mit einem Retarder, einer dahinter angeordneten Analysatorscheibe und einer Photo-Detektor-Matrix, **dadurch gekennzeichnet,**
daß der Retarder (20) ein einstückiges Retarderarray (21) mit mindestens einer Pixelgruppe (25) ist, die mindestens drei Pixel (23) aufweist, deren Hauptachsenausrichtungen (24) über einen Winkelbereich von 360° verteilt sind.

2. Mikropolarimeter nach Anspruch 1, **dadurch gekennzeichnet,** daß die Pixel (23) einer Pixelgruppe (25) in mindestens einer Pixelzeile (26) angeordnet sind.

3. Mikropolarimeter nach Anspruch 1 oder 2, **dadurch gekennzeichnet,** daß das Retarderarray (21) eine Pixelmatrix mit identischen Pixelzeilen (26) aufweist.

4. Mikropolarimeter nach Anspruch 3, **dadurch gekennzeichnet,** daß zwischen der Probe (1) und dem Retarderarray (21) ein Prisma oder ein Gitter zur Wellenlängenselektion angeordnet ist.

5. Mikropolarimeter nach einem der Ansprüche 1 bis 4, **dadurch gekennzeichnet,** daß die Pixel (23) einer Pixelgruppe (25) zweidimensional angeordnet sind.

6. Mikropolarimeter nach einem der Ansprüche 1 bis 5, **dadurch gekennzeichnet,** daß die Pixel (23) aus dielektrischen Gitterstrukturen mit Gitterabständen < der Lichtwellenlänge bestehen.

7. Mikropolarimeter nach einem der Ansprüche 1 bis 6, **dadurch gekennzeichnet,** daß die Detektorpixel (8) der Größe der Pixel (23) entsprechen.

8. Mikropolarimeter nach einem der Ansprüche 1 bis 7, **dadurch gekennzeichnet,** daß die Pixel (23) des Retarderarrays (21) auf einem gemeinsamen Substrat (22) angeordnet sind.

9. Mikropolarimeter nach einem der Ansprüche 1 bis 8, **dadurch gekennzeichnet,** daß das Retarderarray (21) auf einem Analysatorplättchen (5) aufgeklebt ist.

10. Mikropolarimeter nach Anspruch 9, **dadurch gekennzeichnet,** daß das Analysatorplättchen (5) auf der Photo-Detektor-Matrix aufgeklebt ist.

11. Mikropolarimeter nach einem der Ansprüche 1 bis 9, **dadurch gekennzeichnet,** daß das Retarderarray (21) mittels lithographischer, präge- oder spritzgußtechnischer Verfahren hergestellt ist.

12. Ellipsometer mit Lichtquelle, Polarisator, Polarimeter und Auflichtmikroskop mit Objektiv und Okular, wobei Polarisator und Polarimeter im Auflichtmikroskop integriert sind, **dadurch gekennzeichnet,**
daß das Polarimeter ein Mikropolarimeter (15) mit einem Retarder, einer dahinter angeordneten Analysatorscheibe (4) und einer Photo-Detektor-Matrix (7) ist, wobei der Retarder ein einstückiges Retarderarray (21) mit mindestens einer Pixelgruppe (25) ist, die mindestens drei Pixel (23) aufweist, deren Hauptachsenausrichtungen (24) über einen Winkelbereich von 360° verteilt sind, und daß das Mikropolarimeter (15) in der Brennebene des Okulars (14) angeordnet ist.

13. Ellipsometer nach Anspruch 12, **dadurch gekennzeichnet,** daß im Strahlengang des Mikroskops Mittel zur Einstellung des Einfallswinkels auf der Probenoberfläche angeordnet sind.

14. Ellipsometer nach Anspruch 12 oder 13, **dadurch gekennzeichnet,** daß vor dem Objektiv (13) eine Ringblende (12) angeordnet ist.

15. Ellipsometer nach einem der Ansprüche 12 bis 14, **dadurch gekennzeichnet,** daß der Polarisator (3) zwischen einem Kollimator (10) und einem Strahlteiler (11) des Mikroskops angeordnet ist.

16. Ellipsometer mit Lichtquelle, Polarisator und Polarimeter,
**dadurch gekennzeichnet,**
daß die Lichtquelle ein Laserdiodenarray (30) mit Kollimationslinsen (31) ist und daß das Polarimeter ein Mikropolarimeter (15) mit einem Retarder, einer dahinter angeordneten Analysatorscheibe (4) und einer Photo-Detektor-Matrix (7) ist, wobei der Retarder ein einstückiges Retarderarray (21) mit mindestens einer Pixelgruppe (25) ist, die mindestens drei Pixel (23) aufweist, deren Hauptachsenausrichtungen (24) über einen Winkelbereich von 360° verteilt sind.
